# FASCICULE DE BREVET EUROPEEN

(11) **EP 1 625 322 B1**
(45) Date de publication et mention de la délivrance du brevet: **22.11.2006**
(21) Numéro de dépôt: 04742788.5
(22) Date de dépôt: 19.05.2004
(51) Int. Cl.: F16L 37/35, F16L 37/32

(54) **RACCORD RAPIDE POUR CONDUITES DE FLUIDE HYDRAULIQUE**
SCHNELLVERSCHLUSSKUPPLUNG FÜR HYDRAULIKFLÜSSIGKEITSLEITUNGEN
QUICK-CONNECT COUPLING FOR HYDRAULIC FLUID CONDUITS

(30) Priorité: 20.05.2003 FR 0306057
(43) Date de publication de la demande: 15.02.2006
(73) Titulaire: PARKER HANNIFIN SA, 74100 Annemasse (FR)
(72) Inventeur: GIAGNOLI, Sylvain, F-74100 Ambilly (FR); ROLLI, Richard, F-74130 Bonneville (FR)
(74) Mandataire: Maureau, Philippe
(86) Numéro de dépôt international: PCT/FR2004/001245
(87) Numéro de publication internationale: WO 2004/104467

(56) Documents cités:
- DE-A- 3 713 284
- DE-A- 3 942 618
- FR-A- 2 738 896

## Description

La présente invention a pour objet un raccord rapide pour conduites de fluide hydraulique. Un tel raccord rapide pour conduites de fluide hydraulique est connu notamment par le document EP-0 847 511 au nom de la Demanderesse, et aussi par le document FR 2738896 A.

Un tel raccord hydraulique comprend de façon connue en soi un élément mâle et un élément femelle dont les extrémités à connecter sont fermées par des soupapes, chaque soupape comportant un organe obturateur venant en appui contre l'organe obturateur de l'autre soupape lors de la connexion, chaque organe obturateur étant pressé élastiquement contre un siège en position d'ouverture du raccord, l'élément femelle comportant une partie tubulaire extérieure fixée à l'extrémité d'une conduite ou à un récepteur hydraulique, à l'intérieur de laquelle est montée coulissante une partie tubulaire d'accouplement de la partie mâle, qui contient elle-même une soupape, la partie tubulaire d'accouplement étant montée coulissante dans la partie extérieure, dans un sens d'introduction, à l'encontre de l'action de moyens élastiques, des joints étant prévus entre les deux parties tubulaires, qui délimitent des chambres annulaires, dont au moins une est à la pression hydraulique de la conduite ou du récepteur auquel est fixé l'élément femelle.

Le problème qui se pose est que, lors de la phase d'accouplement au cours de laquelle la partie mobile d'accouplement pénètre dans la partie tubulaire extérieure, la pression existant du côté de la partie femelle, à l'intérieur d'une tubulure ou à l'intérieur du récepteur, tend à s'opposer à la connexion.

Le but de la présente invention est donc de fournir un agencement permettant cette connexion, en autorisant le déplacement de la partie tubulaire d'accouplement vis-à-vis de la partie tubulaire extérieure, même en présence d'une pression hydraulique à l'intérieur de l'élément femelle de connexion.

A cet effet, dans le raccord qu'elle concerne, la partie tubulaire d'accouplement comporte, dans la zone située au niveau d'un joint délimitant une chambre sous pression hydraulique et une chambre à la pression atmosphérique, au moins une rainure longitudinale ou similaire ménagée dans l'une au moins des parties tubulaires et positionnée de façon à mettre en communication une chambre sous pression hydraulique et une chambre annulaire à la pression atmosphérique au cours de la phase d'accouplement, c'est-à-dire lorsque la partie tubulaire d'accouplement est en position d'introduction dans la partie tubulaire extérieure, et ne permet pas une telle communication lorsque l'élément femelle est en position accouplée ou en position désaccouplée.

De ce fait, lors de l'introduction de la partie mobile d'accouplement dans la partie tubulaire extérieure de l'élément femelle, le joint séparant la chambre dans laquelle règne une pression hydraulique et la chambre à la pression atmosphérique va se trouver en regard d'au moins une rainure, permettant l'annulation de la compression du joint et autorisant une fuite de liquide hydraulique vers la chambre à pression atmosphérique. La pression ayant ainsi chuté dans l'élément femelle, le verrouillage de l'élément mâle va pouvoir se faire, et la partie mobile d'accouplement va revenir à sa position initiale dans laquelle l'étanchéité est de nouveau réalisée.

Selon une première forme d'exécution, la partie tubulaire d'accouplement comporte dans la zone située au niveau d'un joint délimitant la chambre annulaire à la pression hydraulique et une chambre annulaire à la pression atmosphérique, au moins une rainure longitudinale positionnée de façon à mettre en communication la chambre annulaire à la pression hydraulique et la chambre annulaire à la pression atmosphérique au cours de la phase d'accouplement, c'est-à-dire lorsque la partie tubulaire d'accouplement est en position d'introduction dans la partie tubulaire extérieure, et ne permet pas une telle communication lorsque l'élément femelle est en position accouplée ou en position désaccouplée.

Selon une seconde forme d'exécution, la partie tubulaire d'accouplement comporte, dans la zone située au niveau d'un joint une rainure longitudinale ou similaire positionnée de façon à mettre en communication la chambre annulaire à la pression hydraulique et la chambre annulaire à la pression atmosphérique au cours de la phase d'accouplement.

Selon une troisième forme d'exécution, la partie tubulaire d'accouplement comporte, dans la zone située au niveau d'un joint une rainure longitudinale ou similaire positionnée de façon à mettre en communication l'intérieur de la partie tubulaire de la partie femelle avec la chambre annulaire à la pression atmosphérique, au cours de la phase d'accouplement.

La ou les rainures longitudinales peuvent être obtenues par des techniques connues, telles que fraisage, ou usinage, tel que tournage, meulage, découpe, emboutissage.

Avantageusement, la section d'au moins une rainure longitudinale augmente depuis l'extrémité de celle-ci située du côté de la chambre sous pression hydraulique vers son extrémité située du côté de la chambre à la pression atmosphérique.

Cet agencement permet une mise en communication progressive de la chambre soumise à la pression hydraulique et de la chambre soumise à la pression atmosphérique.

En outre, les moyens de mise en communication entre une chambre sous pression et une chambre à la pression atmosphérique sont constitués par des usinages et/ou perçages ménagés dans la partie tubulaire extérieure et/ou dans la partie tubulaire d'accouplement.

De toute façon l'invention sera bien comprise, à l'aide de la description qui suit, en référence au dessin schématique annexé représentant, à titre d'exemples non limitatifs, plusieurs formes d'exécution de ce raccord.
Figure 1 est une vue en coupe longitudinale et en position désaccouplée de l'élément mâle et de l'élément femelle.

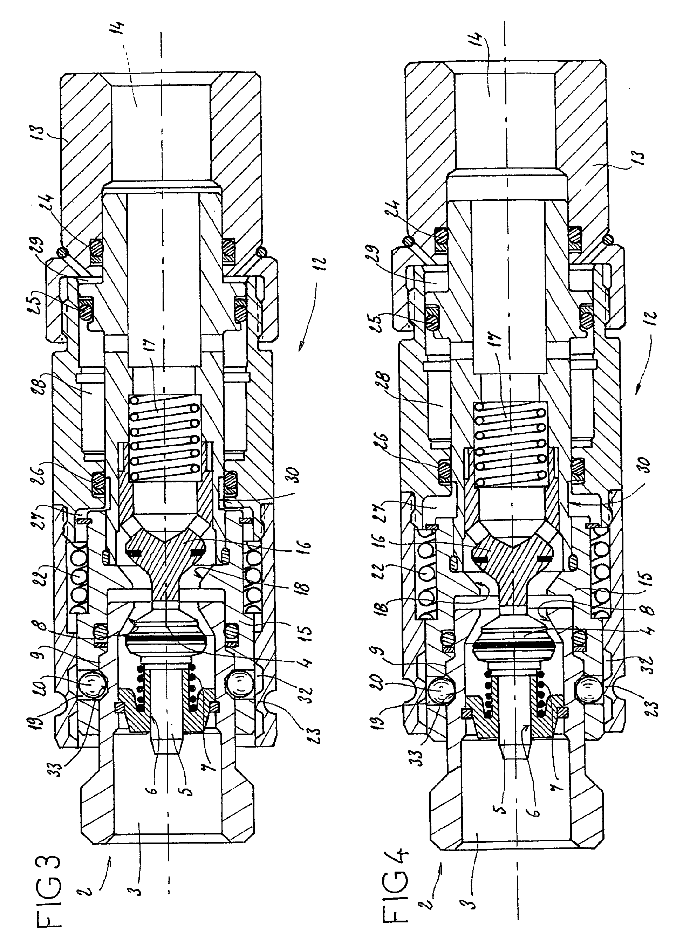

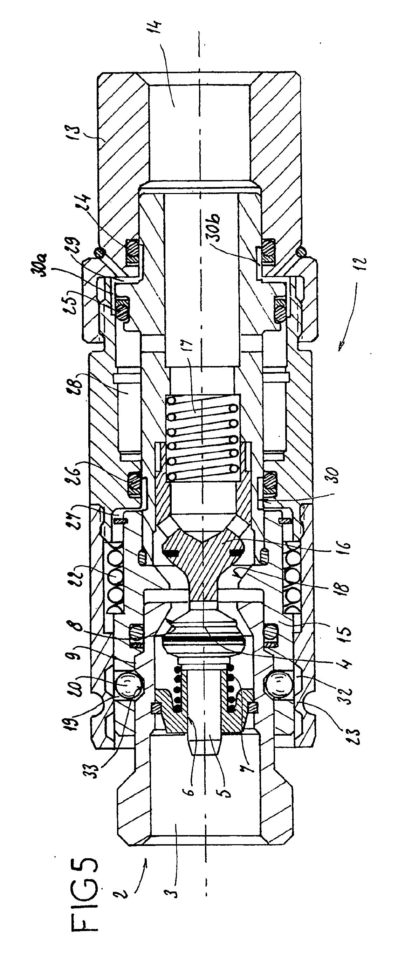

Figures 2 à 4 sont trois vues en coupe longitudinale respectivement au début de l'introduction de l'élément mâle dans l'élément femelle, au cours de la phase d'accouplement, et après accouplement.
Figure 5 est une vue en coupe longitudinale représentant plusieurs formes d'exécution de mise en communication d'une chambre sous pression et d'une chambre à la pression atmosphérique.

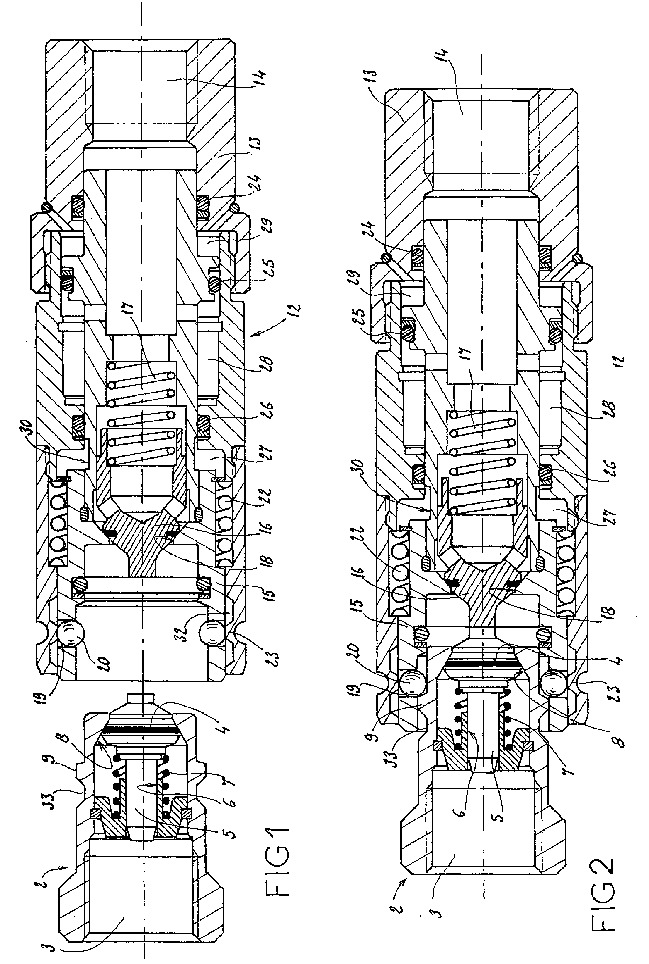

La figure 1 représente le raccord en position désaccouplée.

Ce raccord comprend un élément mâle 2 pouvant être fixé, par exemple sur une tubulure flexible par vissage à l'aide d'un filetage 3.

L'élément mâle 2 comporte, à son extrémité avant, un élément obturateur 4 dont la paroi postérieure comprend une tige 5 montée coulissante dans un cylindre 6 fixé dans l'élément mâle. Un ressort 7 disposé entre la partie inférieure du cylindre et la tête de l'organe obturateur 4 maintient normalement celle-ci en position de fermeture étanche contre un siège 8. L'élément mâle comporte, à proximité de son extrémité avant un épaulement annulaire 9.

Ce raccord comprend également un élément femelle 12 constitué par une partie tubulaire extérieure 13 dont l'extrémité postérieure présente un filetage 14 pour son montage sur une tubulure ou sur un récepteur. A l'intérieur de la partie tubulaire extérieure est montée une partie mobile d'accouplement 15, qui est coulissante dans la partie extérieure 13.

A l'intérieur de la partie mobile d'accouplement 15 est monté coulissant un organe obturateur 16, soumis à l'action d'un ressort 17 le maintenant plaqué avec étanchéité contre un siège 18.

La partie mobile d'accouplement 15 comporte, à proximité de son extrémité avant, des évidements 19 servant au logement de billes 20. Un ressort 22 maintient la partie 15 dans la position représentée aux figures 1 et 2, dans laquelle les billes 20 sont maintenues en saillie vers l'intérieur de la paroi intérieure de la partie mobile 15 par appui sur un bossage annulaire 23 que comporte la partie extérieure tubulaire 13. La partie mobile d'accouplement 15 est montée coulissante dans la partie extérieure 13 avec interposition de trois joints toriques respectivement 24, 25 et 26. La chambre 27 contenant le ressort 22 est à la pression atmosphérique. La chambre 28 disposée entre les joints 25 et 26 est à la pression hydraulique du récepteur sur lequel est monté l'élément femelle 12. La chambre 29 disposée entre les joints 24 et 25 est à la pression atmosphérique. Comme montré au dessin, il est prévu au moins une rainure longitudinale 30 ménagée dans la paroi extérieure de la partie mobile d'accouplement 15, dans la zone située entre la chambre 27 à la pression atmosphérique et le joint torique 26. Comme montré au dessin, chaque rainure 30 est située entre la chambre 27 et le joint 26, lorsque la partie mobile d'accouplement 15 est en position désaccouplée ou en position accouplée, chaque rainure dépassant le joint torique 26 au cours de la phase d'accouplement.

L'utilisation de ce raccord rapide est la suivante.

Partant de la position représentée à la figure 1, l'élément mâle 2 est positionné et introduit dans la partie mobile d'accouplement de l'élément femelle 12. Au cours de ce mouvement, et comme montré à la figure 2, l'épaulement 9 de l'élément femelle prend appui contre les billes de verrouillage 20, provoquant un déplacement de la partie mobile d'accouplement 15 dans la partie extérieure tubulaire 13, dans un sens d'introduction dans cette dernière. Au cours de ce mouvement, les billes de verrouillage 20 s'escamotent dans une gorge annulaire 32 de la partie extérieure tubulaire, permettant le passage de l'épaulement 9 derrière les billes 20 qui pénètrent alors dans une gorge 33 annulaire de l'élément mâle. Au cours de ce mouvement, les rainures longitudinales 30 de la partie mobile d'accouplement 15 viennent se placer sous le joint torique 26, et vont annuler la compression du joint et permettre une fuite de liquide hydraulique à partir de la chambre 28. La pression ayant ainsi chuté dans le coupleur, le verrouillage par les billes peut se faire, et la partie mobile d'accouplement 15 peut revenir à sa position initiale, sous l'effet de détente du ressort 22, les billes étant de nouveau immobilisées radialement par l'épaulement 23, dans la gorge 33 de l'élément mâle.

Il est à noter que la mise en communication de la tubulure à laquelle est fixé l'élément mâle, et du récepteur est réalisée par ouverture des soupapes que comportent les éléments mâle 2 et femelle 12 par appui l'un sur l'autre de leurs organes obturateurs respectifs 4, 16.

II doit être noté que le nombre de rainures 30 est d'au moins un et que la section de chaque rainure peut varier en augmentant depuis son extrémité située du côté de la chambre dans laquelle règne la pression hydraulique vers son extrémité située du côté de la chambre à pression atmosphérique.

La figure 5 représente plusieurs formes d'exécution d'un raccord selon l'invention. Outre la rainure 30 associée au joint 26, cette figure montre également une rainure 30a associée au joint 25, et susceptible de mettre en communication la chambre 28 à la pression hydraulique et la chambre 29 à la pression atmosphérique, et une rainure 30b associée au joint 24. et susceptible de mettre l'intérieur de la partie tubulaire à la pression hydraulique en communication avec la chambre 29, à la pression atmosphérique.

Ces différentes solutions peuvent être mises en oeuvre séparément ou de façon combinée, en totalité ou en partie.

Comme il ressort de ce qui précède, l'invention apporte une grande amélioration à la technique existante en fournissant un coupleur permettant, grâce à un aménagement simple, de réaliser une connexion y compris lorsque l'élément femelle d'accouplement est soumis à une pression hydraulique.

## Revendications

1. Raccord rapide pour conduites de fluide hydraulique comprenant un élément mâle (2) et un élément femelle (12) dont les extrémités à connecter sont fermées par des soupapes, chaque soupape comportant un organe obturateur (4, 16) venant en appui contre l'organe obturateur (16, 4) de l'autre soupape lors de la connexion, chaque organe obturateur (4, 16) étant pressé élastiquement contre un siège (8, 18) en position d'ouverture du raccord, l'élément femelle (12) comportant une partie tubulaire extérieure (13) fixée à l'extrémité d'une conduite ou à un récepteur hydraulique, à l'intérieur de laquelle est montée coulissante une partie tubulaire d'accouplement (15) de la partie mâle, qui contient elle-même une soupape, la partie tubulaire d'accouplement (15) étant montée coulissante dans la partie extérieure (13), dans un sens d'introduction, à l'encontre de l'action de moyens élastiques (22), des joints (24, 25, 26) étant prévus entre les deux parties tubulaires (13, 15), qui délimitent des chambres annulaires (27, 28, 29), dont au moins une (28) est à la pression hydraulique de la conduite ou du récepteur auquel est fixé l'élément femelle (12),
**caractérisé en ce que** la partie tubulaire d'accouplement (13) comporte, dans la zone située au niveau d'un joint (24, 25, 26) délimitant une chambre sous pression hydraulique (28) et une chambre à la pression atmosphérique (27, 29), au moins une rainure longitudinale ou similaire (30) ménagée dans l'une au moins des parties tubulaires (13, 15) et positionnée de façon à mettre en communication une chambre sous pression hydraulique (28) et une chambre annulaire à la pression atmosphérique (27, 29) au cours de la phase d'accouplement, c'est-à-dire lorsque la partie tubulaire d'accouplement (15) est en position d'introduction dans la partie tubulaire extérieure (13), et ne permet pas une telle communication lorsque l'élément femelle (12) est en position accouplée ou en position désaccouplée.

2. Raccord selon la revendication 1, **caractérisé en ce que** la partie tubulaire d'accouplement (13) comporte dans la zone située au niveau d'un joint (26) délimitant la chambre annulaire (28) à la pression hydraulique et une chambre annulaire (27) à la pression atmosphérique, au moins une rainure longitudinale (30) positionnée de façon à mettre en communication la chambre annulaire (28) à la pression hydraulique et la chambre annulaire (27) à la pression atmosphérique au cours de la phase d'accouplement, c'est-à-dire lorsque la partie tubulaire d'accouplement (15) est en position d'introduction dans la partie tubulaire extérieure (13), et ne permet pas une telle communication lorsque l'élément femelle (12) est en position accouplée ou en position désaccouplée.

3. Raccord selon la revendication 1, **caractérisé en ce que** la partie tubulaire d'accouplement (13) comporte, dans la zone située au niveau d'un joint (25) une rainure longitudinale ou similaire (30a) positionnée de façon à mettre en communication la chambre annulaire (28) à la pression hydraulique et la chambre annulaire (29) à la pression atmosphérique au cours de la phase d'accouplement.

4. Raccord selon la revendication 1, **caractérisé en ce que** la partie tubulaire d'accouplement (13) comporte, dans la zone située au niveau d'un joint (24) une rainure longitudinale (30b) ou similaire positionnée de façon à mettre en communication l'intérieur de la partie tubulaire de la partie femelle avec la chambre annulaire (29) à la pression atmosphérique, au cours de la phase d'accouplement.

5. Raccord selon l'une des revendications 1 à 4, **caractérisé en ce que** la section d'au moins une rainure longitudinale (30) augmente depuis l'extrémité de celle-ci située du côté de la chambre (28) sous pression hydraulique vers son extrémité située du côté de la chambre (27) à la pression atmosphérique.

6. Raccord selon l'une des revendications 1 à 4, **caractérisé en ce que** les moyens de mise en communication entre une chambre sous pression (28) et une chambre à la pression atmosphérique (27, 29) sont constitués par des usinages et/ou perçages ménagés dans la partie tubulaire extérieure (13) et/ou dans la partie tubulaire d'accouplement (15).

## Claims

1. Quick coupling for hydraulic fluid pipes, comprising a male element (2) and a female element (12) whose ends which are to be connected are closed by valves, each valve comprising a shut-off member (4', 16) which comes into bearing contact with the shut-off member (16, 4) of the other valve upon connection, each shut-off member (4, 16) being pressed elastically against a seat (8, 18) in the open position of the coupling, the female element (12) comprising an outer tubular part (13) fastened to the end of a pipe or to a hydraulic receiver and inside which is slidably mounted a tubular coupling part (15) for coupling the male part, and which itself contains a valve, the tubular coupling part (15) being slidably mounted in the outer part (13), in an insertion direction, against the action of elastic means (22), seals (24, 25, 26) being provided between the two tubular parts (13, 15) and delimiting annular chambers (27, 28, 29), at least one (28) of which is at the hydraulic pressure of the pipe or of the receiver to which the female element (12) is fastened, **characterised in that** the tubular coupling part (13) comprises, in the region of a seal (24, 25, 26) delimiting a chamber under hydraulic pressure (28) and a chamber at atmospheric pressure (27, 29), at least one longitudinal slot or the like (30) formed in at least one of the tubular parts (13, 15) and positioned in such a way as to bring a chamber under hydraulic pressure (28) into communication with an annular chamber at atmospheric pressure (27, 29) during the coupling phase, that is to say when the tubular coupling part (15) is in the inserted position in the outer tubular part (13), and does not allow such a communication when the female element (12) is in the coupled position or in the uncoupled position.

2. Coupling according to Claim 1, **characterised in that** the tubular coupling part (13) comprises, in the region of a seal (26) delimiting the annular chamber (28) at hydraulic pressure and an annular chamber (27) at atmospheric pressure, at least one longitudinal slot (30) positioned in such a way as to bring the annular chamber (28) at hydraulic pressure into communication with the annular chamber (27) at atmospheric pressure during the coupling phase, that is to say when the tubular coupling part (15) is in the inserted position in the outer tubular part (13), and does not allow such a communication when the female element (12) is in the coupled position or in the uncoupled position.

3. Coupling according to Claim 1, **characterised in that** the tubular coupling part (13) comprises, in the region of a seal (25), a longitudinal slot or the like (30a) positioned in such a way as to bring the annular chamber (28) at hydraulic pressure into communication with the annular chamber (29) at atmospheric pressure during the coupling phase.

4. Coupling according to Claim 1, **characterised in that** the tubular coupling part (13) comprises, in the region of a seal (24), a longitudinal slot (30b) or the like positioned in such a way as to bring the interior of the tubular part of the female part into communication with the annular chamber (29) at atmospheric pressure during the coupling phase.

5. Coupling according to one of Claims 1 to 4, **characterised in that** the cross section of at least one longitudinal slot (30) increases from the end thereof situated on the side of the chamber (28) under hydraulic pressure towards its end situated on the side of the chamber (27) at atmospheric pressure.

6. Coupling according to one of Claims 1 to 4, **characterised in that** the means for bringing about communication between a chamber under pressure (28) and a chamber at atmospheric pressure (27, 29) consist of machined and/or drilled features formed in the outer tubular part (13) and/or in the tubular coupling part (15).

## Patentansprüche

1. Schnellverschlusskupplung für Hydraulikflüssigkeitsleitungen, die ein Steckelement (2) und ein Buchsenelement (12) aufweist, deren zu verbindende Enden durch Ventile verschlossen sind, wobei jedes Ventil ein Verschlussorgan (4, 16) aufweist, das beim Verbinden gegen das Verschlussorgan (16, 4) des anderen Ventils zum Aufliegen kommt, wobei jedes Verschlussorgan (4, 16) in Öffnungsposition der Kupplung elastisch gegen einen Sitz (8, 18) gedrückt wird, wobei das Buchsenelement (12) einen äußeren röhrenförmigen Teil (13) aufweist, der an dem Ende einer Leitung oder eines Hydraulikgefäßes befestigt ist, in dessen Innerem ein röhrenförmiger Kupplungsteil (15) des Steckteils gleitend montiert ist, der selbst ein Ventil enthält, wobei der röhrenförmige Kupplungsteil (15) in dem äußeren Teil (13) in eine Einfügerichtung gegen die Wirkung elastischer Mittel (22) gleitend montiert ist, wobei Dichtungen (24, 25, 26) zwischen den zwei röhrenförmigen Teilen (13, 15) vorgesehen sind, die Ringkammern (27, 28, 29) abgrenzen, von welchen zumindest eine (28) den Hydraulikdruck der Leitung oder des Gefäßes hat, an der das Buchsenelement (12) befestigt ist,
**dadurch gekennzeichnet, dass** der röhrenförmige Kupplungsteil (13) in der Zone, die auf der Ebene einer Dichtung (24, 25, 26), die eine Kammer unter Hydraulikdruck (28) und eine Kammer unter Luftdruck (27, 29) abgrenzt, mindestens eine Längsrille oder Ähnliches (30) aufweist, die in mindestens einem der röhrenförmigen Teile (13, 15) eingerichtet und so positioniert ist, dass eine Kammer unter Hydraulikdruck (28) und eine Ringkammer unter Luftdruck (27, 29) im Laufe der Kupplungsphase in Kommunikation gebracht werden, das heißt, wenn sich der röhrenförmige Kupplungsteil (15) in der Position des Einfügens in den äußeren röhrenförmigen Teil (13) befindet, und keine solche Kommunikation erlaubt, wenn sich das Buchsenelement (12) in gekuppelter oder abgekuppelter Stellung befindet.

2. Schnellverschlusskupplung nach Anspruch 1, **dadurch gekennzeichnet, dass** der röhrenförmige Kupplungsteil (13) in der Zone, die auf der Ebene einer Dichtung (26), die eine Ringkammer (28) mit Hydraulikdruck und eine Ringkammer (27) mit Luftdruck abgrenzt, liegt, mindestens eine Längsrille (30) aufweist, die so positioniert ist, dass sie die Ringkammer (28) mit Hydraulikdruck und die Ringkammer (27) mit Luftdruck im Laufe der Kupplungsphase in Kommunikation bringt, das heißt, wenn sich der röhrenförmige Kupplungsteil (15) in der Position des Einfügens in den äußeren röhrenförmigen Teil (13) befindet, und eine solche Kommunikation nicht erlaubt, wenn sich das Buchsenelement (12) in gekuppelter oder abgekuppelter Stellung befindet.

3. Schnellverschlusskupplung nach Anspruch 1, **dadurch gekennzeichnet, dass** der röhrenförmige Kupplungsteil (13) in der Zone, die auf der Ebene einer Dichtung (25) liegt, eine Längsrille oder Ähnliches (30a) aufweist, die so positioniert ist, dass sie die Ringkammer (28) mit Hydraulikdruck und die Ringkammer (29) mit Luftdruck im Laufe der Kupplungsphase in Kommunikation bringt.

4. Schnellverschlusskupplung nach Anspruch 1, **dadurch gekennzeichnet, dass** der röhrenförmige Kupplungsteil (13) in der Zone, die auf der Ebene einer Dichtung (24) liegt, eine Längsrille (30b) oder Ähnliches aufweist, die so positioniert ist, dass sie im Laufe der Kupplungsphase das Innere des röhrenförmigen Teils des Buchsenelements mit der Ringkammer (29) mit Luftdruck in Kommunikation bringt.

5. Schnellverschlusskupplung nach einem der Ansprüche 1 bis 4, **dadurch gekennzeichnet, dass** der Querschnitt mindestens einer Längsrille (30) von dem Ende dieser, das auf der Seite der Kammer (28) unter Hydraulikdruck liegt, zu ihrem Ende auf der Seite der Kammer (27) mit Luftdruck zunimmt .

6. Schnellverschlusskupplung nach einem der Ansprüche 1 bis 4, **dadurch gekennzeichnet, dass** die Mittel zum Herstellen der Kommunikation zwischen einer Kammer unter Druck (28) und einer Kammer unter Luftdruck (27, 29) aus Bearbeitungen und/oder Bohrungen bestehen, die in dem äußeren röhrenförmigen Teil (13) und/oder in dem röhrenförmigen Kupplungsteil (15) eingerichtet sind.
